# FASCICULE DE BREVET EUROPEEN

(11) **EP 3 142 967 B1**
(45) Date de publication et mention de la délivrance du brevet: **20.02.2019**
(21) Numéro de dépôt: 15725839.3
(22) Date de dépôt: 11.05.2015
(51) Int. Cl.: C01B 3/50, C01B 3/56, F25J 3/02, F25J 3/06

(54) **PROCÉDÉ DE TRAITEMENT POUR LA SÉPARATION DE DIOXYDE DE CARBONE ET D'HYDROGÈNE D'UN MÉLANGE**
BEHANDLUNGSVERFAHREN ZUR ABSCHEIDUNG VON KOHLENDIOXID UND WASSERSTOFF AUS EINER MISCHUNG
TREATMENT METHOD FOR SEPARATING CARBON DIOXIDE AND HYDROGEN FROM A MIXTURE

(30) Priorité: 15.05.2014 FR 1454349
(43) Date de publication de la demande: 22.03.2017
(73) Titulaire: L'Air Liquide Société Anonyme pour l'Etude et l'Exploitation des Procédés Georges Claude, 75007 Paris (FR)
(72) Inventeur: CHAMBRON, Nicolas, 94100 Saint Maur des Fosses (FR); DUBETTIER-GRENIER, Richard, F-94210 La Varenne Saint Hilaire (FR); LECLERC, Mathieu, F-75020 Paris (FR); MARTY, Pascal, F-94360 Bry Sur Marne (FR)
(74) Mandataire: Mercey, Fiona Susan
(86) Numéro de dépôt international: PCT/FR2015/051224
(87) Numéro de publication internationale: WO 2015/173499

(56) Documents cités:
- EP-A1- 0 341 879
- WO-A1-2006/097703
- FR-A1- 2 877 939

## Description

La présente invention concerne un procédé de traitement d'un mélange en vue de la séparation de dioxyde de carbone (CO₂) et d'hydrogène (H₂) de ce mélange.

Actuellement, une des principales techniques utilisées dans le cadre de la production d'hydrogène est le reformage à la vapeur d'hydrocarbures, dont notamment le méthane (SMR acronyme de *Steam Methane Reforming*). D'autres techniques telles que le reformage auto-thermique (ATR acronyme de *Auto-Thermal reforming*) et l'oxydation partielle catalytique ou non catalytique (POX acronyme de *Partial Oxydation*) peuvent également être utilisées selon le type de matière première à traiter. Par la réaction de reformage, les hydrocarbures sont transformés en un mélange gazeux comprenant de l'hydrogène (H₂) et du monoxyde de carbone (CO) selon les réactions suivantes CₙHₘ + nH₂O + chauffage → nCO + (n+m/2)H₂ ou CₙHₘ + n/2O₂ → nCO + (m/2)H₂ en fonction de la technique utilisée.

Le mélange gazeux ainsi produit est ensuite couramment envoyé dans un réacteur de shift (*Water gas shift reactor*) afin de produire d'avantage de H₂ et de convertir le CO en CO₂ par la réaction exothermique suivante : CO + H₂O → CO₂ + H₂.

Le gaz ainsi obtenu riche en CO₂ et H₂ est ensuite généralement envoyé dans un module d'adsorption avec variation de pression pour hydrogène appelé PSA H₂ (PSA étant l'acronyme de *Pressure Swing Adsorption*) qui permet de produire de l'hydrogène à haute pureté (de 99% à 99.9999 mole%).

Le résiduaire du module d'adsorption avec variation de pression pour hydrogène (également appelé off-gas du module d'adsorption avec variation de pression pour hydrogène ou off-gas du PSA) contient quant à lui tout le CO₂, la très grande majorité du CH₄ et du CO non convertis, de l'azote (N₂), de l'argon (Ar) et de l'hydrogène dont la quantité dépend du rendement du module d'adsorption avec variation de pression pour hydrogène.

Le plus couramment, le gaz résiduaire, y compris le CO₂ qu'il contient, est utilisé comme combustible dans les bruleurs du four de reformage. La chaleur est utilisée dans le cadre d'une intégration thermique de l'unité globale et/ou pour exporter de la vapeur. Le gaz résiduaire est ensuite rejeté dans l'air.

Dans le cadre de la réduction des émissions de CO₂ dans l'atmosphère, des solutions ont été développées pour permettre de récupérer la plus grande quantité possible de CO₂ dans des mélanges gazeux tels que des gaz résiduaires.

Il est par exemple connu de traiter le gaz résiduaire du module d'adsorption avec variation de pression pour hydrogène pour en extraire du CO₂.

EP-A- 0 341 879 décrit par exemple un traitement du résiduaire du module d'adsorption avec variation de pression pour hydrogène au moyen d'un module d'adsorption avec variation de pression pour dioxyde de carbone (PSA CO₂) et d'une partie cryogénique.

WO-A- 2006/054008 traite, quant à lui, le résiduaire du module d'adsorption avec variation de pression pour hydrogène au moyen d'une étape cryogénique et de membranes. Ce procédé permet de produire un courant de CO₂ pur, un courant d'incondensables et un courant riche en H₂.

Il est également possible de traiter le mélange gazeux obtenu par une seconde réaction de shift en amont du module d'adsorption avec variation de pression pour hydrogène. Ainsi, FR-A- 2 939 785 décrit l'utilisation d'un module d'adsorption avec variation de pression pour CO₂ et d'une étape cryogénique produisant un courant de CO₂ pur et un courant riche en H₂ traité par la suite dans le module d'adsorption avec variation de pression pour hydrogène.

Ces différentes méthodes de récupération du CO₂ sont complexes et nécessitent des installations coûteuses avec notamment plusieurs modules d'adsorption avec variation de pression II existe donc un besoin pour un procédé et/ou une installation permettant la séparation et la récupération du CO₂ et de l'H₂ d'un mélange.

WO-A-2006/097703 et FR-A-2877939 décrivent un procédé selon le préambule de la revendication 1, dans lequel le module d'adsorption sépare le mélange en amont d'une étape de séparation cryogénique.

La présente invention apporte une solution à ce besoin, qui est simple, efficace et économique.

L'invention propose à cet effet un procédé de traitement d'un mélange en vue de la séparation de dioxyde de carbone et d'hydrogène de ce mélange, dans lequel :
i) le mélange est refroidi et partiellement condensé, un premier liquide est séparé du mélange dans un premier séparateur de phases,
ii) un gaz provenant du premier séparateur de phases est traité dans un module d'adsorption avec variation de pression pour hydrogène pour produire un gaz riche en hydrogène et un gaz résiduaire appauvri en hydrogène, et
iii) ledit gaz résiduaire appauvri en hydrogène est refroidi et partiellement condensé, un second liquide est séparé du gaz restant dans un deuxième séparateur de phases, distinct du premier séparateur de phases,
le premier et le second liquide étant riches
en dioxyde de carbone caractérisé en ce que les condensations partielles aux étapes i) et iii) sont réalisées dans une même unité cryogénique.

Dans la présente demande, on entend par gaz ou liquide « issu » d'une étape ou d'un élément, un gaz ou un liquide qui est généré directement par cette étape ou qui provient directement d'un élément. A contrario, un gaz ou liquide « dérivé » est un gaz ou un liquide qui peut, après ladite étape ou ledit élément, avoir été soumis à au moins une étape complémentaire ou traité par au moins un élément complémentaire.

Par ailleurs, « riche en » signifie comprenant au moins 50% de la substance concernée, de préférence au moins 60%, voire 70%, voire 80%, et de façon optimisée au moins 90%, voire 95%, ou encore 99%. « Pauvre en » signifie comprenant au plus 50% de la substance concernée, de préférence au plus 40%, voire 30%, voire 20%, et de façon optimisée au plus 10%, voire 5%, ou encore 1%. Un gaz, un liquide, un mélange, un courant, un flux, une fraction, un perméat, un résidu peuvent être riche ou pauvre en une substance.

La présente invention permet la séparation et la récupération de CO₂ au moyen de deux étapes de condensation partielle cryogéniques et de séparation qui sont appliquées respectivement au mélange alimentant le module d'adsorption avec variation de pression pour hydrogène et au gaz résiduaire sortant du module d'adsorption avec variation de pression pour hydrogène. L'invention permet ainsi d'obtenir un gaz riche en H₂ (produit par le module d'adsorption avec variation de pression pour hydrogène) et au moins un liquide riche en CO₂, ce qui évite de rejeter ce CO₂ dans l'air. La réduction de la teneur en CO₂ du mélange entrant dans le module d'adsorption avec variation de pression pour hydrogène permet également de diminuer la taille de celui-ci et d'améliorer son rendement.

Le mot « cryogénique » est utilisé dans ce texte dans un sens large, englobant toute température inférieure à -10°C, voire inférieure à -40°C.

Un module d'adsorption avec variation de pression (appelé aussi PSA pour *Pressure Swing Adsorption*) est une technologie utilisée pour séparer différents gaz d'un mélange sous pression à des températures proches de la température ambiante, en fonction de leurs caractéristiques moléculaires et de leur affinité pour un matériau adsorbant. Les matériaux adsorbants (par exemple, les zéolithes) sont utilisés comme tamis moléculaire adsorbant préférentiellement les gaz cibles. Une fois les gaz cibles adsorbés à haute pression, le système est mis sous basse pression pour la désorption des gaz adsorbés et leur relargage. Un module d'adsorption avec variation de pression pour hydrogène (PSA H₂) est un module d'adsorption avec variation de pression qui permet de séparer l'hydrogène du reste des constituants d'un mélange gazeux.

De façon avantageuse, les condensations partielles aux étapes i) et iii) sont réalisées dans un même échangeur de chaleur, dit échangeur principal. Un tel procédé permet d'optimiser la récupération en CO₂ et de diminuer les coûts énergétiques.

Une unité cryogénique peut comprendre au moins un échangeur de chaleur de type multi-fluides et au moins un séparateur de phases. L'échangeur peut être un échangeur brasé en aluminium du type BAHX, par exemple.

En variante, l'unité cryogénique peut comprendre deux échangeurs de chaleur qui sont chacun utilisés pour mettre en oeuvre l'une des étapes de condensation précitées. Les échangeurs sont alors de préférence couplés pour diminuer le coût énergétique.

De façon avantageuse, la condensation partielle du mélange ou du gaz, aux étapes i) et iii), a lieu dans des conditions proches du point triple du CO₂ (5,2 bars à -56,6 °C) pour que le flux riche en CO₂ soit généré sous forme liquide et puisse être séparé des composants restants sous forme gazeuse dits incondensables, tels que CH₄, CO, N₂, Ar, H₂.

Le mélange ou le gaz peut être partiellement condensé à l'étape i) ou iii) à une température inférieure à -20°C et plus particulièrement inférieure à -40°C.

Dans un mode de réalisation de l'invention, l'étape i) comprend les sous-étapes suivantes :
- une première condensation partielle dudit mélange à une température inférieure à - 20°C, et plus particulièrement proche de -40 °C environ,
- une séparation du liquide du reste du mélange dans un séparateur de phases,
- une deuxième condensation partielle dudit reste du mélange à une température inférieure à -40°C et plus particulièrement de -50 °C environ,
- une séparation du liquide du gaz restant dans un autre séparateur de phases, le liquide ou un liquide dérivé du liquide issu d'au moins l'un des séparateurs de phases étant riche en dioxyde de carbone.

Ce mode de réalisation permet de réduire la consommation de froid du procédé en ne refroidissant le courant total entrant dans l'échangeur que jusqu'à une température intermédiaire et en ne refroidissant jusqu'à une température très basse qu'un débit réduit constitué uniquement de la phase non condensée à la température intermédiaire. Le condensat qui se serait déjà formé à une température intermédiaire (de l'ordre de -20 à - 40°C) n'est ainsi pas refroidi inutilement à très basse température.

Ce mode de réalisation permet également de produire, dès le premier séparateur de phases, un courant plus concentré en CO₂ qu'en sortie du deuxième séparateur de phases. En effet, le CO₂ se condense très facilement par rapport aux autres constituants du mélange et sa condensation à une température plus chaude permet de le condenser en moins grande quantité mais plus pur qu'à une température plus froide où d'autres constituants seraient également condensés.

Le procédé selon l'invention peut comprendre, avant l'étape i), une étape préliminaire de génération d'un mélange riche en CO et H₂. Il peut s'agir, par exemple d'une oxydation partielle catalytique ou non catalytique (POX) ou une étape de reformage à la vapeur d'hydrocarbures (SMR) ou une étape de reformage auto-thermique (ATR) combinée ou pas à un ou plusieurs réacteurs de shift.

L'oxydation partielle (POX) survient quand un mélange air-carburant en quantité sous-stoechiométrique est partiellement brûlé dans une unité de reformage créant ainsi un gaz de synthèse riche en hydrogène selon la réaction chimique : CₙHₘ + n/2O₂ → nCO + (m/2)H₂.

Le reformage à la vapeur d'hydrocarbures, notamment à la vapeur de méthane (SMR) est largement utilisé dans l'industrie pour fabriquer de l'hydrogène à partir d'hydrocarbures comme le gaz naturel. Le méthane (ou des hydrocarbures légers comme le biogaz ou des matières premières de raffinerie) est mélangé à de la vapeur d'eau puis injecté dans des tubes remplis de catalyseurs (généralement au nickel) et portés à très haute température pour produire de l'hydrogène selon la réaction CₙHₘ + nH₂O + chauffage → nCO + (n+m/2)H₂.

Le reformage auto-thermique (ATR) est une méthode combinant les deux méthodes précédentes. Elle consiste à utiliser l'énergie libérée par la réaction exothermique d'oxydation des hydrocarbures pour favoriser la réaction de reformage du méthane en présence d'eau. Les réactions ont lieu dans une enceinte unique.

Le mélange riche en CO et H₂ peut ensuite être traité dans un réacteur de shift pour donner un mélange enrichi en CO₂ et H₂. Cet enrichissement se fait par la réaction de shift (ou réaction de *water-gas shift* (WGS)), dans laquelle le CO réagit avec de l'eau pour former du CO₂ et du H₂ : CO + H₂O → CO₂ + H₂.

Le gaz de synthèse ainsi obtenu peut ensuite être comprimé et/ou déshydraté.

Selon un mode de réalisation de l'invention, le liquide ou un liquide dérivé du liquide issu d'au moins l'un des séparateurs de phases est distillé pour fournir une fraction riche en CO₂ et une fraction appauvrie en CO₂.

Cette étape de distillation permet de produire une fraction riche en CO₂ avec une haute pureté (de l'ordre du ppm en méthane par exemple). Elle peut être mise en oeuvre au moyen d'une colonne de distillation, qui permet d'éliminer les composés tels que le méthane, le monoxyde de carbone, l'azote, l'argon et/ou l'hydrogène. La fraction appauvrie en CO₂ peut être recyclée en la mélangeant audit mélange, avant l'étape i), en amont du premier séparateur de phases, ou en la mélangeant audit gaz appauvri en H₂, entre les étapes ii) et iii), en amont du deuxième séparateur de phases. En effet, ladite fraction contient une quantité non négligeable de CO₂ qui peut être recyclée à différents niveaux du procédé pour maintenir un rendement de récupération élevé en CO₂.

Dans la présente demande, on entend par « recycler », « recyclé » ou « recyclage » : la réinjection dans le circuit du procédé de traitement d'un liquide ou d'un gaz (qui pourrait être considéré comme un courant résiduaire) pour récupérer du CO₂ et/ou de l'H₂ de ce liquide ou gaz, qui peut être présent en quantité non négligeable.

Dans un autre mode de réalisation de l'invention, ledit gaz restant issu du deuxième séparateur de phases est filtré par au moins un système membranaire.

Les systèmes membranaires sont de préférence constitués de membranes de perméation. La perméation est la pénétration d'un constituant à travers une couche mince de matière. Elle est directement liée au gradient de concentration du constituant, la perméabilité intrinsèque du matériau, et son coefficient de diffusion. La perméation est modélisée par exemple par les équations des lois de la diffusion de Fick, et peut être mesurée en utilisant des outils tels qu'un permeamètre. On choisira des membranes dans lesquelles le CO₂ et l'H₂ ont une importante perméance et sélectivité.

L'utilisation de systèmes membranaires permet de récupérer une quantité non négligeable de CO₂ et de H₂ encore contenue dans le gaz restant à la sortie du deuxième séparateur de phases. Il est ainsi possible d'atteindre des rendements de récupération de CO₂ très élevés (de plus de 95% par exemple) tout en augmentant le rendement de production en H₂.

De façon avantageuse, ledit gaz restant issu du deuxième séparateur de phases (étape iii)) est traité dans un premier système membranaire conduisant à l'obtention d'un perméat riche en H₂ et d'un résidu riche en CO₂.

Ledit perméat riche en H₂ peut être recyclé en le mélangeant audit mélange, avant l'étape i), ou audit gaz issu ou dérivé d'un gaz issu du premier séparateur de phases, entre les étapes i) et ii), en amont du module d'adsorption avec variation de pression pour hydrogène et/ou entrée du module d'adsorption avec variation de pression pour hydrogène. Le rendement de production de H₂ est ainsi amélioré. En fonction de la pression dudit perméat, celui-ci peut éventuellement être comprimé avant d'être recyclé.

Ledit résidu riche en CO₂ est avantageusement traité dans un second système membranaire conduisant à l'obtention d'un perméat riche en CO₂ et d'un résidu riche en CH₄, CO, N₂ et Ar et pauvre en H₂ et CO₂.

Ledit perméat riche en CO₂ peut être recyclé en le mélangeant au gaz appauvri en H₂, entre les étapes ii) et iii), en amont du deuxième séparateur de phases de l'étape iii).

En fonction de la pression dudit perméat, celui-ci peut éventuellement être comprimé avant d'être recyclé.

L'invention concerne aussi une installation pour la mise en oeuvre du procédé tel que décrit précédemment, caractérisé en ce qu'elle comprend :
- un module d'adsorption avec variation de pression pour hydrogène, et
- une unité cryogénique comportant un premier et un second séparateurs de phases et un échangeur de chaleur comportant un premier circuit de refroidissement dont une entrée est configurée pour être reliée à une source dudit mélange, et dont une sortie est reliée au premier séparateur de phases dont une sortie de gaz est reliée à l'entrée du module d'adsorption avec variation de pression pour hydrogène, le module d'adsorption avec variation de pression pour hydrogène comportant une sortie de gaz appauvri en hydrogène qui est reliée à une entrée d'un second circuit de refroidissement de l'échangeur de chaleur ou d'un autre échangeur de chaleur de l'unité cryogénique, une sortie de ce second circuit de refroidissement étant reliée au deuxième séparateur de phases.

L'échangeur de chaleur comportant le premier et/ou le second circuit de refroidissement peut comprendre un circuit de chauffage dont une entrée est reliée à la sortie de gaz du premier séparateur de phases et dont la sortie est reliée à l'entrée du module d'adsorption avec variation de pression pour hydrogène.

L'installation peut également comporter au moins un élément parmi :
- une unité de reformage,
- un réacteur de shift,
- une unité de séchage,
- une colonne de distillation,
- au moins un système membranaire,
- au moins un compresseur,
- au moins un détendeur,
- au moins une vanne,
- au moins une pompe,
-. une sortie d'hydrogène gazeux reliée au module.

L'invention sera mieux comprise, et d'autres buts, détails, caractéristiques et avantages de celle-ci apparaîtront plus clairement au cours de la description explicative détaillée qui va suivre, de plusieurs modes de réalisation de l'invention donnés à titre d'exemples purement illustratifs et non limitatifs, en référence aux dessins schématiques annexés.

Sur ces dessins :
- la figure 1 illustre schématiquement une installation de mise en oeuvre d'un procédé de traitement selon l'invention ; et
- les figures 2 à 6 représentent schématiquement des variantes de réalisation de l'installation de mise en oeuvre du procédé selon l'invention.

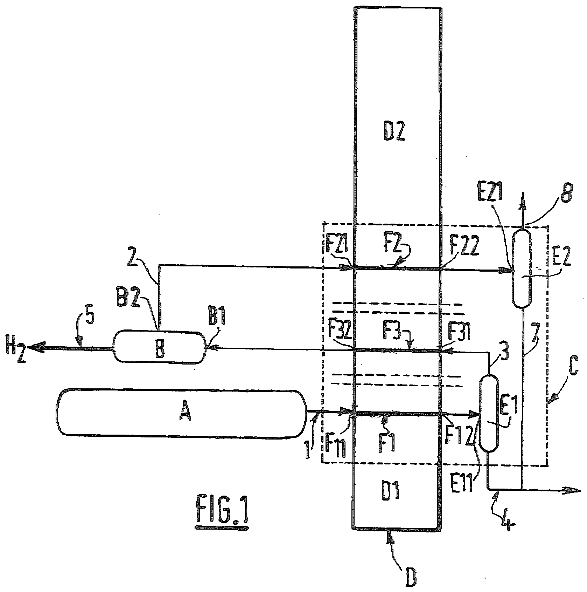

La figure 1 montre une installation de mise en oeuvre des étapes élémentaires du procédé selon l'invention, pour traiter un mélange 1 en vue de la séparation de dioxyde de carbone (CO₂) et d'hydrogène (H₂) de ce mélange.

L'installation de la figure 1 comporte ainsi :
- une source A du mélange 1,
- un module d'adsorption avec variation de pression pour hydrogène (PSA H₂) B, et
- une unité cryogénique C comportant un ou deux échangeurs de chaleur D1 et D2 et un premier et un second séparateurs de phases E1 et E2.

Dans l'unité cryogénique, tous les éléments illustrés n'opèrent pas à des températures cryogéniques. Seulement la partie basse température de l'échangeur et les deux séparateur de phases, ainsi que les conduites les rejoignant opèrent à des températures inférieures à -10°C.

Pour plus de clarté, nous utiliserons dans la suite de la description le terme PSA H₂ pour désigner un module d'adsorption avec variation de pression pour hydrogène.

Dans le cas préféré où l'unité cryogénique C comprend un seul échangeur de chaleur, dit échangeur principal D, celui-ci comprenant plusieurs circuits parmi lesquels :
- un premier circuit de refroidissement F1 dont l'entrée F11 est configurée pour être reliée à la source A dudit mélange 1 et la sortie F12 est reliée à l'entrée E11 du premier séparateur de phases E1,
- un second circuit de refroidissement F2 dont l'entrée F21 est reliée à la sortie B2 de gaz 2 appauvri en hydrogène du PSA H₂ B et la sortie F22 est reliée à l'entrée E21 du deuxième séparateur de phases E2, et
- un circuit de chauffage F3, dont l'entrée F31 est reliée à la sortie de gaz 3 du premier séparateur de phases E1 et la sortie F32 est reliée à l'entrée B1 du PSA H₂ B.

Dans le cas où l'unité cryogénique C comprend deux échangeurs indépendants D1 et D2, comme cela est schématiquement représenté par des traits pointillés parallèles en figure 1, deux options sont envisageables: le premier échangeur D1 comprend le circuit F1 et éventuellement le circuit F3, et le second échangeur D2 comprend le circuit F2 et éventuellement le circuit F3 (si ce dernier ne fait pas partie du premier échangeur D1).

Le procédé selon l'invention comprend trois étapes successives i), ii) et iii) :
i) le mélange 1 est partiellement condensé et un premier liquide 4 obtenu est séparé du reste (gaz 3) du mélange dans le premier séparateur de phases E1,
ii) le gaz 3 est traité dans le PSA H₂ B pour produire un gaz 5 riche en H₂ et un gaz 2 appauvri en H₂, et
iii) le gaz 2 appauvri en H₂ est partiellement condensé et un second liquide 7 obtenu est séparé du gaz restant 8 dans le deuxième séparateur de phases E2.

Dans la première étape i), le mélange 1 circule dans le circuit de refroidissement F1 et est donc refroidi, par exemple à une température très basse (environ -50°C), pour condenser le CO₂ présent dans le mélange 1. Comme expliqué dans ce qui précède, la condensation du CO₂ est obtenue en appliquant au mélange 1 des conditions proches du point triple du CO₂ (5,2 bars à -56,6 °C) pour que le CO₂ passe sous forme liquide et puisse être séparé des gaz restants comportant des incondensables, tels que CH₄, CO, N₂, Ar, H₂. Le premier liquide 4 issu du premier séparateur de phases E1 est ainsi riche en CO₂ (de l'ordre de 95% à 99%), tandis que le gaz 3 sortant de ce séparateur E1 contient la quasi-totalité du H₂, une très grande quantité des molécules les plus volatiles (CH₄, CO, N₂, Ar), et encore une quantité non négligeable de CO₂.

Entre les étapes i) et ii), le gaz 3 circule dans le circuit de chauffage F3 afin qu'il échange de la chaleur avec les fluides circulant dans les autres circuits F1, F2. Etant donné que le gaz 3 est très froid, il absorbera de la chaleur et libérera du froid en circulant dans le circuit F3, et sortira de ce circuit avec une température supérieure à sa température d'entrée, ce qui explique pourquoi ce circuit D3 est appelé circuit de chauffage.

Dans l'étape ii), le PSA H₂ B permet de séparer l'hydrogène du reste des constituants du gaz 3 sortant du circuit F3, avec un rendement compris entre 75% et 95%. La pureté de l'hydrogène produit (gaz 5) est alors supérieure à 99% molaire. Le gaz 2 appauvri en H₂ produit par le PSA H₂ B contient quant à lui la quasi-totalité du CO₂ présent dans le gaz entrant dans le PSA H₂ B, les autres constituants (CH₄, CO, N₂, Ar) et notamment une quantité non négligeable de H₂ résultant du rendement non total du PSA H₂ B.

Dans la troisième étape iii), le gaz 2 circule dans le circuit de refroidissement F1 et est donc refroidi, par exemple à une température très basse (environ -50°C), pour condenser le CO₂ présent dans ce gaz 2, dans les mêmes conditions que celles exposées ci-dessus (proches du point triple du CO₂). Le second liquide 7 issu du second séparateur de phases E2 est ainsi riche en CO₂, tandis que le gaz 8 sortant de ce séparateur E2 contient la quasi-totalité des incondensables (CH₄, CO, N₂, Ar) et une quantité non négligeable de H₂ et CO₂.

Les liquides 4 et 7 issus des séparateurs de phases E1 et E2 sont riches en CO₂. Un tel procédé permet d'atteindre un rendement global de récupération du CO₂ de plus de 90%.

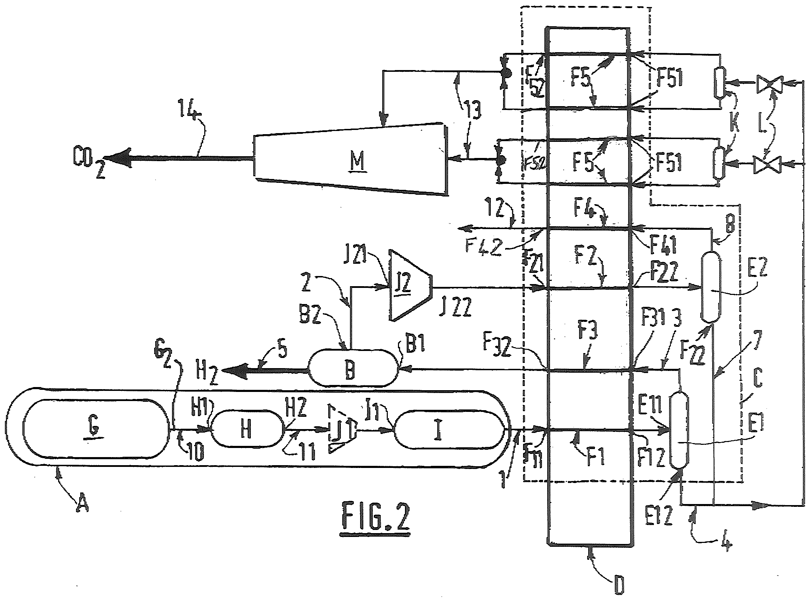

La figure 2 montre une variante de réalisation de l'installation de mise en oeuvre du procédé selon l'invention, dans laquelle le mélange 1 à traiter est un gaz de synthèse.

Dans cette variante, la source A de mélange 1 comprend :
- une unité de reformage G,
- un réacteur de shift H,
- une unité de séchage I,
- et éventuellement un compresseur J1.

L'unité de reformage G permet de générer par un procédé ATR, SMR ou POX un mélange 10 riche en CO et en H₂. La sortie G2 de l'unité de reformage G est reliée à l'entrée H1 du réacteur de shift H qui transforme le mélange 10 en un mélange gazeux 11 enrichi en CO₂ et H₂. La sortie H₂ du réacteur de shift H est reliée à l'entrée I1 de l'unité de séchage I, par l'intermédiaire éventuellement du compresseur J1, pour produire un gaz de synthèse correspondant au mélange 1.

La technologie utilisée pour la réaction de shift (H) peut être un shift à haute température (*High Temperature Shift* en anglais) ou un shift à haute puis basse température (*High Temperature Shift* + *Low Temperature Shift* en anglais) ou un shift isotherme (*Isothermal Shift* en anglais) ou un shift isotherme puis basse température (*Isothermal Shift*+ *Low Temperature Shift* en anglais). La technologie du shift isotherme peut être préférée car elle permet un taux de conversion plus élevé. Dans cette technologie, le gaz de reformage passe à travers des tubes remplis de catalyseur immergé dans de l'eau. La chaleur du gaz reformé est réutilisée pour produire la vapeur nécessaire à la réaction.

L'unité de séchage I, permet de déshydrater le mélange gazeux 11, par dessiccation par exemple. De façon avantageuse, il s'agit de la seule étape de séchage. Le fait de placer cette étape à haute pression avant l'étape i) précitée permet de maximiser l'efficacité du séchage et d'augmenter le rendement du PSA H₂ B à l'étape ii).

Selon la pression à laquelle a eu lieu l'étape de génération du mélange 10, une étape de compression du mélange gazeux 11 peut éventuellement être ajoutée avant l'étape de séchage dans l'unité I.

Le positionnement de cette éventuelle compression par rapport à l'étape de séchage peut résulter d'un optimum entre le fait d'adsorber l'humidité à une pression élevée et le coût des bouteilles d'adsorption à une telle pression.

Le mélange 1 ainsi obtenu est principalement constitué d'H₂, de CO et de CO₂.

Dans la variante de la figure 2, l'unité cryogénique C comprend un unique échangeur de chaleur multi-fluide, dit échangeur principal D. Celui-ci comprend les premier et second circuits de refroidissement F1 et F2 et le circuit de chauffage F3 décrits précédemment. Il comprend également un second circuit de chauffage F4 dont l'entrée F41 est reliée à la sortie de gaz restant 8 du second séparateur de phases E2 et la sortie F42 fournit un gaz 12 contenant la quasi-totalité des incondensables (CH₄, CO, N₂, Ar) et éventuellement une quantité non négligeable de H₂ et CO₂. Le passage du gaz 8 dans le circuit F4 de l'échangeur permet au gaz 8 d'absorber de la chaleur et de libérer du froid, qui ainsi récupéré pour la condensation aux étapes i) et iii).

L'installation comprend également un compresseur J2 dont l'entrée J21 est reliée à la sortie B2 du PSA H₂ B et la sortie J22 est reliée à l'entrée F21 du second circuit de refroidissement F2. Ce compresseur J2 permet de comprimer le gaz 2 appauvri en hydrogène produit par le PSA H₂ B, qui est à basse pression (de l'ordre de 1,0 à 5.0 bars), jusqu'à une pression élevée (par exemple du même ordre de grandeur que celle du mélange 1 entrant dans l'échangeur principal D).

Dans l'exemple représenté, l'installation comprend en outre un troisième circuit de chauffage F5, des détendeurs K, des vannes L et un compresseur M.

Le circuit de chauffage F5 comprend plusieurs entrées F51 (ici, quatre entrées F51 sont représentées) reliées aux sorties E12 et E22 des deux séparateurs de phases E1 et E2, par l'intermédiaire de vannes L et de détendeurs K, et plusieurs sorties F52 (ici, quatre sorties F52 sont représentées) reliées au compresseur M. Les liquides 4 et 7 sortant des deux séparateurs de phases E1 et E2 sont mélangés puis détendus à différents niveaux de pression et réchauffés dans les circuits F5 en libérant du froid par vaporisation, puis sortent de ces circuits pour produire un courant 13 de CO₂ purifié.

Avant détente, les liquides 4, 7 peuvent être sous-refroidis à travers l'échangeur principal D (étape non représentée sur la figure) afin notamment de limiter le flash lors des détentes dites « BP » et « HP » et ainsi de limiter la perte de froid engendrée par ces flashs.

Le compresseur M peut être associé à une pompe pour délivrer un courant 14 de CO₂ purifié à une pression prédéterminée.

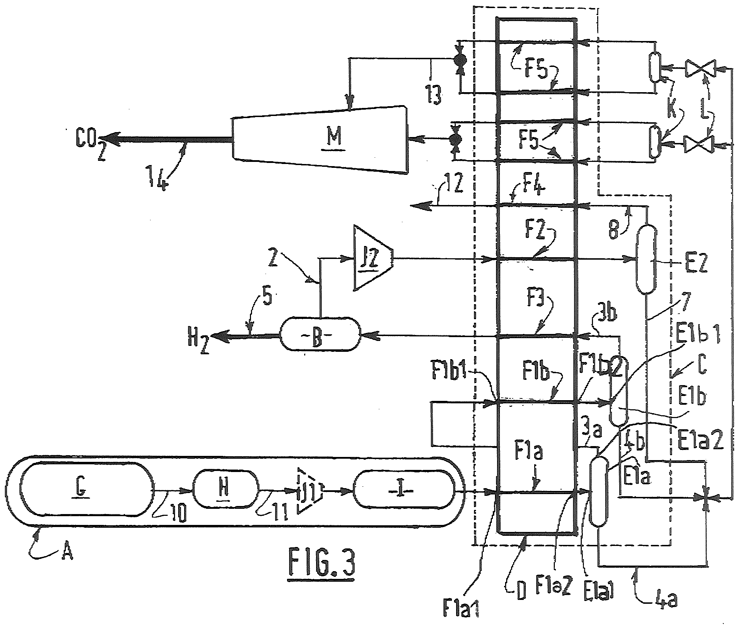

La figure 3 montre une autre variante de réalisation de l'installation de mise en oeuvre du procédé selon l'invention, qui diffère de la précédente variante de la figure 2, essentiellement par le fait que le premier circuit de refroidissement F1 et le premier séparateur de phases E1 sont remplacés par deux circuits de refroidissement F1a, F1b et deux séparateurs de phases E1a, E1b. Cette installation permet de refroidir le mélange 1 en deux étapes et ainsi de réduire la consommation en froid de l'installation.

Ainsi, l'échangeur de chaleur D de l'unité cryogénique C de l'installation de la figure 3 comprend plusieurs circuits:
- un premier circuit de refroidissement F1a configuré pour refroidir le mélange 1 à une température inférieure à -20°C par exemple,
- un circuit intermédiaire de refroidissement F1b configuré pour refroidir à une température inférieure à -40°C par exemple,
- un second circuit de refroidissement F2, et
- des circuits de chauffage F3, F5.

Le second circuit de refroidissement F2 et les circuits de chauffage F3, F5 sont identiques à ceux de la variante de l'installation décrite précédemment en référence à la figure 2.

Le premier circuit de refroidissement F1a comprend une entrée F1a1 configurée pour être reliée à la source A dudit mélange 1 et une sortie F1a2 reliée à l'entrée E1a1 d'un séparateur de phases E1a. Le circuit intermédiaire de refroidissement F1b comprend une entrée F1b1 reliée à la sortie E1a2 de gaz 3a de ce séparateur de phases E1a et une sortie F1b2 reliée à l'entrée E1b1 d'un autre séparateur de phases E1b. Comme décrit dans ce qui précède, le gaz 3b sortant du séparateur de phases E1b alimente le circuit de chauffage F3.

Dans cette variante, le procédé mis en oeuvre comprend, à l'étape i) de condensation et de séparation, les sous-étapes suivantes :
- une première condensation partielle du mélange 1 à une température inférieure à - 20°C, et plus particulièrement de -40 °C environ,
- une séparation du liquide 4a du reste du mélange 3a dans le séparateur de phases E1a,
- une deuxième condensation partielle du reste du mélange 3a à une température inférieure à -40°C, et plus particulièrement de -50 °C environ, et
- une séparation du liquide 4b du gaz restant 3b dans l'autre séparateur de phases E1b.

Les liquides 4a et 4b issus des séparateurs de phases E1a et E1b sont riches en CO₂ et sont ici mélangés au liquide 7 provenant du séparateur de phases E2, avant d'être détendus et vaporisés, comme expliqué dans ce qui précède.

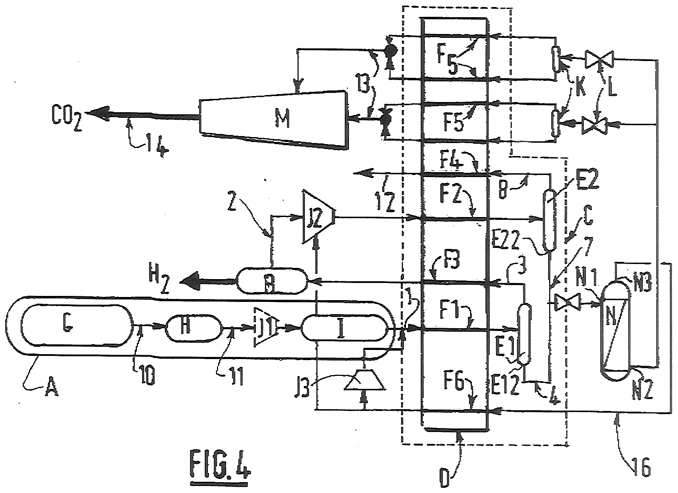

La figure 4 montre une autre variante de réalisation de l'installation de mise en oeuvre du procédé selon l'invention. Cette variante diffère de celle décrite en référence à la figure 2 essentiellement en ce que l'installation comprend une colonne de distillation N. Cette colonne de distillation N comprend une entrée N1 reliée, par exemple par l'intermédiaire d'une vanne, aux sorties E12 et E22 de liquides 4, 7 des deux séparateurs de phases E1 et E2. La colonne de distillation N comprend en outre une première sortie N2 fournissant une fraction 15 riche en CO₂ avec une pureté élevée, et une seconde sortie N3 fournissant une fraction 16 appauvrie en CO₂.

La première sortie N2 de la colonne N est reliée au circuit de chauffage F5 par l'intermédiaire des vannes L et des détendeurs K. La fraction 15 est ainsi transformée en courant 13 de CO₂ purifié puis en courant 14 de CO₂ purifié à pression prédéterminée, comme décrit précédemment.

La seconde sortie N3 de la colonne N peut être reliée à l'entrée d'au moins un des circuits de refroidissement F1 et F2, soit directement, soit par l'intermédiaire d'un circuit de chauffage F6, et éventuellement d'un compresseur, qui peut être un compresseur dédié J3 ou le compresseur J2 décrit dans ce qui précède. La fraction 16 appauvrie en CO₂ est ainsi recyclée en la mélangeant :
- au mélange 1, avant l'étape i), en amont du premier séparateur de phases E1, en étant, éventuellement, au préalable comprimée dans le compresseur J3 pour atteindre une pression prédéterminée, et/ou
- au gaz 2 appauvri en H₂ sortant du PSA B, entre les étapes ii) et iii), en amont du deuxième séparateur de phases E2, ici au niveau du compresseur J2.

Ainsi, le CO₂ encore présent dans la fraction 16 peut être au moins en partie récupéré au sein de l'unité cryogénique C, ce qui permet de maintenir un rendement de récupération élevé en CO₂.

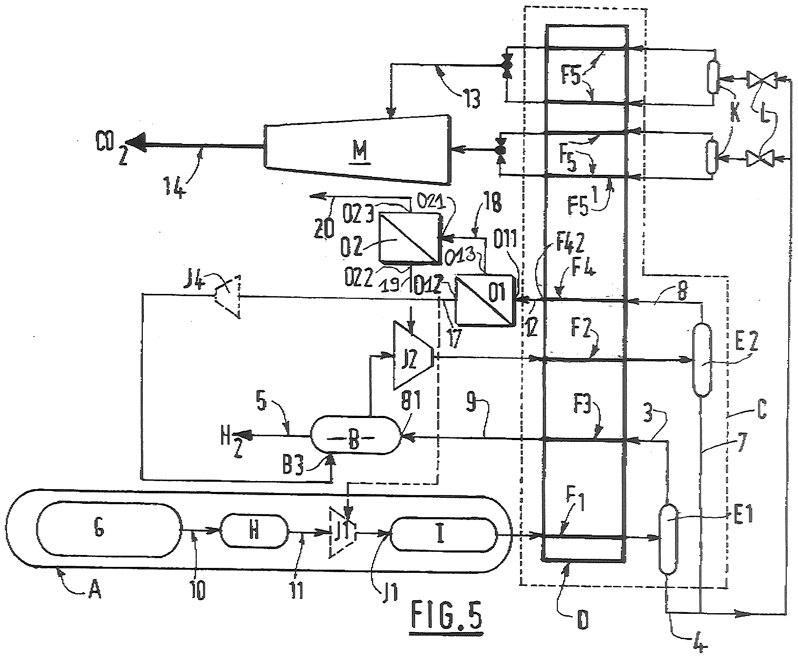

La figure 5 montre une autre variante de réalisation de l'installation de mise en oeuvre du procédé selon l'invention. Cette variante diffère de celle de la figure 2 essentiellement en ce que l'installation comprend en outre deux systèmes membranaires O1 et O2. Le premier système O1 de membrane(s) permet de récupérer l'hydrogène restant dans le gaz 8 sortant du deuxième séparateur de phases E2, tandis que le deuxième système O2 permet d'en récupérer le CO₂.

Le premier système O1 comprend une entrée O11 reliée à la sortie F42 du circuit de chauffage F4, une première sortie O12 fournissant un perméat 17 riche en H₂ et une deuxième sortie O13 fournissant un résidu 18 riche en CO₂.

La première sortie O12 du système O1 peut être reliée à une entrée B1 ou B3 du PSA H₂ B et/ou à l'entrée I1 de l'unité de séchage I, soit directement, soit par l'intermédiaire d'un compresseur qui peut être un compresseur dédié J4 reliée au PSA ou le compresseur J1 précité relié à l'unité de séchage I. Il peut en effet être nécessaire de comprimer le perméat 17 qui est récupéré à une pression largement inférieure à celle du gaz restant 8 entrant dans le premier système O1 du fait de la différence de pression sur laquelle est basée le principe de perméation et de séparation dans une membrane.

Le perméat 17 riche en H₂ peut ainsi être recyclé :
- en le mélangeant au mélange 1, avant l'étape i), et plus particulièrement au mélange 11,
- en le mélangeant au gaz 9 provenant du premier séparateur de phases E1 et du circuit F3, entre les étapes i) et ii), avant l'entrée dans le PSA H₂ B (entrée B1), et/ou
- au niveau du PSA H₂ B (entrée B3).

En fonction de la pression du perméat 17, celui-ci peut éventuellement être comprimé avant d'être recyclé. Dans le cas où sa pression est inférieure à la pression opératoire du PSA H₂ B, il peut être comprimé dans le compresser dédié J4 avant recyclage au PSA H₂ B ou encore comprimé dans le compresseur J1 placé après le réacteur de shift H, avant l'étape i). Si sa pression est égale ou supérieure à la pression opératoire du PSA H₂ B, le perméat peut être recyclé directement au niveau du PSA H₂ B.

Ledit résidu 18 sortant du premier système O1 est récupéré à une pression encore élevée et contient une grande majorité du CO₂ présent à l'entrée du premier module O1, le H₂ ainsi que l'ensemble des autres constituants (CH₄, CO, N₂, Ar) non évacués dans le perméat 17. Il est donc traité dans le deuxième système O2 de membrane(s) dont l'entrée O21 est reliée à la deuxième sortie O13 du premier module O1. Ce deuxième système O2 comprend une première sortie O22 fournissant un perméat 19 riche en CO₂ et une deuxième sortie O23 fournissant un résidu 20 riche en CH₄, CO, N₂ et Ar et pauvre en H₂ et CO₂.

La première sortie O22 peut être reliée à l'entrée F21 du circuit de refroidissement F2 directement ou par l'intermédiaire d'un compresseur, notamment le compresseur J2, en fonction de la pression du perméat 19. Ainsi, ce perméat 19 riche en CO₂ peut être recyclé en le mélangeant au gaz 2 appauvri en H₂, entre les étapes ii) et iii), en amont du séparateur de phases E2.

Une telle variante permet de récupérer le CO₂ et le H₂ contenu en quantité non négligeable (de 40% à 60% d'H₂ et de 15% à 35% de CO₂) dans le gaz restant 8 issu du deuxième séparateur de phases E2 et d'atteindre ainsi des rendements de récupération de CO₂ très élevés, de plus de 95%, et des rendements de récupération de H₂ de l'ordre de 75% à plus de 98%, par exemple.

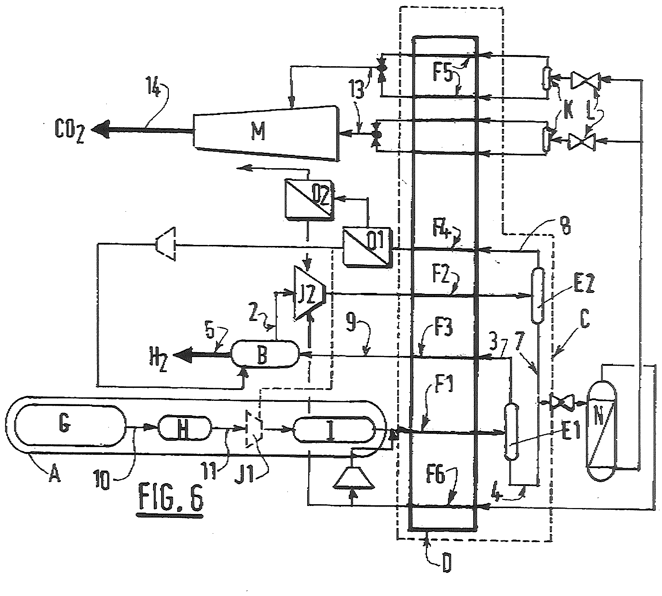

La figure 6 montre une autre variante de réalisation de l'installation de mise en oeuvre du procédé selon l'invention. Cette variante correspond sensiblement à la combinaison des variantes des figures 4 et 5, l'installation comportant ici une colonne de distillation N et deux systèmes membranaires O1 et O2. Cette variante permet d'obtenir un liquide riche en CO₂ avec une haute pureté et un haut rendement de récupération du CO₂ et du H₂.

Il est à noter que d'autres variantes de réalisation sont bien sûr possibles et que la présente invention ne se limite pas aux modes de réalisation représentés. Notamment, il est possible de combiner les variantes ci-dessus les unes avec les autres en fonction des différents besoins, tels que la pureté recherchée du CO₂ et du H₂.

## Revendications

1. Procédé de traitement d'un mélange (1) en vue de la séparation de dioxyde de carbone et d'hydrogène de ce mélange, dans lequel :
i) le mélange (1) est refroidi et partiellement condensé et un premier liquide (4) est séparé du mélange dans un premier séparateur de phases (E1),
ii) un gaz (3) provenant du premier séparateur de phases (E1) est traité dans un module d'adsorption avec variation de pression pour hydrogène (B) pour produire un gaz riche en hydrogène (5) et un gaz (2) résiduaire appauvri en hydrogène, et
iii) ledit gaz (2) résiduaire appauvri en hydrogène est refroidi et partiellement condensé et un second liquide (7) est séparé du gaz restant (8) dans un deuxième séparateur de phases (E2), distinct du premier séparateur de phases (E1),
le premier et le second liquide (4, 7) étant riches en dioxyde de carbone **caractérisé en ce que** les condensations partielles aux étapes i) et iii) sont réalisées dans une même unité cryogénique (C).

2. Procédé selon la revendication 1, dans lequel les condensations partielles aux étapes i) et iii) sont réalisées dans un même échangeur de chaleur (D).

3. Procédé selon l'une quelconque des revendications précédentes, dans lequel ledit mélange (1) est partiellement condensé à l'étape i) à une température inférieure à - 20°C, et plus particulièrement inférieure à -40°C.

4. Procédé selon l'une quelconque des revendications précédentes, dans lequel l'étape i) comprend les sous-étapes suivantes :
- une première condensation partielle dudit mélange (1) à une température inférieure à -20°C et plus particulièrement proche de -40 °C environ,
- une séparation du liquide (4a) du reste du mélange (3a) dans un séparateur de phases (E1a),
- une deuxième condensation partielle dudit reste du mélange (3a) à une température inférieure à -40°C, et plus particulièrement de -50 °C environ,
- une séparation du liquide (4b) du gaz restant (3b) dans un autre séparateur de phases (E1b),
le liquide (4a, 4b) étant riche en dioxyde de carbone.

5. Procédé selon l'une quelconque des revendications précédentes, comprenant, avant l'étape i), une étape préliminaire de génération d'un mélange (10) riche en CO et H₂, par exemple par un procédé de reformage auto-thermique (ATR), de reformage à la vapeur d'hydrocarbures (SMR) ou d'oxydation partielle (POX).

6. Procédé selon la revendication 5, dans lequel ledit mélange (10) riche en CO et H₂ est traité dans un réacteur de shift (H) pour donner un mélange (11) enrichi en CO₂ et H₂.

7. Procédé selon la revendication 5 ou 6, dans lequel ledit mélange (11) est comprimé et/ou déshydraté.

8. Procédé selon l'une quelconque des revendications précédentes, dans lequel ledit gaz (2) est partiellement condensé à l'étape iii) à une température inférieure à -20°C, et plus particulièrement inférieure à -40°C.

9. Procédé selon l'une quelconque des revendications précédentes, dans lequel le liquide (4, 7) est distillé pour fournir une fraction (15) riche en CO₂ et une fraction (16) appauvrie en CO₂.

10. Procédé selon la revendication 9, dans lequel ladite fraction (16) appauvrie en CO₂ est recyclée en la mélangeant audit mélange (1), avant l'étape i), en amont du premier séparateur de phases (E1) ou en la mélangeant audit gaz (2) appauvri en hydrogène, entre les étapes ii) et iii), en amont du deuxième séparateur de phases (E2).

11. Procédé selon l'une quelconque des revendications précédentes, dans lequel ledit gaz restant (8) issu du deuxième séparateur de phases (E2) est filtré par au moins un système membranaire (O1, O2).

12. Installation pour la mise en oeuvre du procédé selon l'une des revendications précédentes, comprenant :
- un module d'adsorption avec variation de pression pour hydrogène (B), et
- une unité cryogénique (C) comportant un premier et un second séparateurs de phases (E1, E2), et un échangeur de chaleur (D) comportant un premier circuit de refroidissement (F1) dont une entrée (F11) est configurée pour être reliée à une source (M) dudit mélange (1), et dont une sortie (F12) est reliée au premier séparateur de phases (E1) dont une sortie (E12) de gaz (3) est reliée à une entrée (B1) du module d'adsorption avec variation de pression pour hydrogène (B), le module d'adsorption avec variation de pression pour hydrogène comportant une sortie (B2) de gaz (2) appauvri en hydrogène qui est reliée à une entrée (F21) d'un second circuit de refroidissement (F2) de l'échangeur de chaleur (D) ou d'un autre échangeur de chaleur de l'unité cryogénique (C), une sortie (F22) de ce second circuit de refroidissement (F2) étant reliée au deuxième séparateur de phases (E2).

13. Installation selon la revendication 12, dans laquelle l'échangeur de chaleur (D) comportant le premier et/ou le second circuit de refroidissement (F1, F2) comprend un circuit de chauffage (F3) dont une entrée (F31) est reliée à la sortie (E12) de gaz (3) du premier séparateur de phases (E1) et dont la sortie (F31) est reliée à l'entrée (B1) du module d'adsorption avec variation de pression pour hydrogène (B).

14. Installation selon la revendication 12 ou 13, comportant en outre au moins un élément parmi :
- une unité de reformage (G),
- un réacteur de shift (H),
- une unité de séchage (I),
- une colonne de distillation (N),
- au moins un système membranaire (O1, O2),
- au moins un compresseur (M, J1, J2, J3, J4),
- au moins un détendeur (K),
- au moins une vanne (L),
- au moins une pompe.

15. Installation selon l'une des revendications 12 à 14 comportant une sortie d'hydrogène gazeux (5) reliée au module d'adsorption avec variation de pression pour hydrogène (B).

## Patentansprüche

1. Verfahren zur Behandlung eines Gemischs (1) zur Abscheidung von Kohlendioxid und Wasserstoff aus diesem Gemisch, wobei:
i) das Gemisch (1) gekühlt und teilweise kondensiert wird und eine erste Flüssigkeit (4) in einem ersten Phasenabscheider (E1) von dem Gemisch abgeschieden wird,
ii) ein Gas (3) aus dem ersten Phasenabscheider (E1) in einem Adsorptionsmodul mit Druckänderung für Wasserstoff (B) zum Erzeugen eines wasserstoffreichen Gases (5) und eines wasserstoffabgereicherten Restgases (2) behandelt wird, und
iii) das wasserstoffabgereicherte Restgas (2) gekühlt und teilweise kondensiert wird und eine zweite Flüssigkeit (7) von dem verbleibenden Gas (8) in einem zweiten Phasenabscheider (E2), getrennt vom ersten Phasenabscheider (E1), abgeschieden wird,
wobei die erste und zweite Flüssigkeit (4, 7) reich an Kohlendioxid sind, **dadurch gekennzeichnet, dass** die Teilkondensationen in den Schritten i) und iii) in derselben kryogenen Einheit (C) durchgeführt werden.

2. Verfahren nach Anspruch 1, wobei die Teilkondensationen in den Schritten i) und iii) in demselben Wärmeaustauscher (D) durchgeführt werden.

3. Verfahren nach einem der vorstehenden Ansprüche, wobei das Gemisch (1) in Schritt i) bei einer Temperatur von unter -20 °C, und insbesondere unter -40 °C, teilweise kondensiert wird.

4. Verfahren nach einem der vorstehenden Ansprüche, wobei der Schritt i) die folgenden Teilschritte umfasst:
- eine erste Teilkondensation des Gemischs (1) bei einer Temperatur von unter -20 °C und insbesondere in der Nähe von etwa -40 °C,
- eine Abscheidung der Flüssigkeit (4a) vom Rest des Gemischs (3a) in einem Phasenabscheider (E1a),
- eine zweite Teilkondensation des Rests des Gemischs (3a) bei einer Temperatur von unter -40 °C, und insbesondere bei etwa -50 °C,
- eine Abscheidung der Flüssigkeit (4b) vom verbleibenden Gas (3b) in einem anderen Phasenabscheider (E1b), wobei die Flüssigkeit (4a, 4b) reich an Kohlendioxid ist.

5. Verfahren nach einem der vorstehenden Ansprüche, umfassend, vor dem Schritt i), einen Vorschritt zum Erzeugen eines CO- und H₂-reichen Gemischs (10), zum Beispiel durch ein autothermisches Reformierungsverfahren (ATR), ein Kohlenwasserstoffdampfreformierungsverfahren (SMR) oder ein Teiloxidationsverfahren (POX).

6. Verfahren nach Anspruch 5, wobei das CO- und H₂-reiche Gemisch (10) in einem Verschiebungsreaktor (H) behandelt wird, um ein mit CO₂ und H₂ angereichertes Gemisch (11) zu erhalten.

7. Verfahren nach Anspruch 5 oder 6, wobei das Gemisch (11) komprimiert und/oder dehydriert wird.

8. Verfahren nach einem der vorstehenden Ansprüche, wobei das Gas (2) im Schritt iii) bei einer Temperatur von unter -20 °C, und insbesondere unter -40 °C, teilweise kondensiert wird.

9. Verfahren nach einem der vorstehenden Ansprüche, wobei die Flüssigkeit (4, 7) destilliert wird, um eine CO₂-reiche Fraktion (15) und eine CO₂-abgereicherte Fraktion (16) bereitzustellen.

10. Verfahren nach Anspruch 9, wobei die CO₂-abgereicherte Fraktion (16) durch Mischen derselben mit dem Gemisch (1) vor dem Schritt i) stromaufwärts des ersten Phasenabscheiders (E1) oder durch Mischen derselben mit dem wasserstoffabgereicherten Gas (2) zwischen den Schritten ii) und iii) stromaufwärts des zweiten Phasenabscheiders (E2) rezykliert wird.

11. Verfahren nach einem der vorstehenden Ansprüche, wobei das verbleibende Gas (8), das aus dem zweiten Phasenabscheider (E2) hervorgeht, durch mindestens ein Membransystem (O1, O2) gefiltert wird.

12. Einrichtung zur Durchführung des Verfahrens nach einem der vorstehenden Ansprüche, umfassend:
- ein Adsorptionsmodul mit Druckänderung für Wasserstoff (B) und
- eine kryogene Einheit (C), die einen ersten und einen zweiten Phasenabscheider (E1 E2), und einen Wärmeaustauscher (D) aufweist, der einen ersten Kühlkreislauf (F1) aufweist, von dem ein Einlass (F11) konfiguriert ist, um mit einer Quelle (M) des Gemischs (1) verbunden zu werden, und von dem ein Auslass (F12) mit dem ersten Phasenabscheider (E1) verbunden ist, von dem ein Auslass (E12) für Gas (3) mit einem Einlass (B1) des Adsorptionsmoduls mit Druckänderung für Wasserstoff (B) verbunden ist, wobei das Adsorptionsmodul mit Druckänderung für Wasserstoff einen Auslass (B2) für wasserstoffarmes Gas (2) aufweist, der mit einem Einlass (F21) eines zweiten Kühlkreislaufs (F2) des Wärmeaustauschers (D) oder eines anderen Wärmeaustauschers der kryogenen Einheit (C) verbunden ist, wobei ein Auslass (F22) dieses zweiten Kühlkreislaufs (F2) mit dem zweiten Phasenabscheider (E2) verbunden ist.

13. Installation nach Anspruch 12, wobei der Wärmeaustauscher (D). der den ersten und/oder den zweiten Kühlkreislauf (F1, F2) aufweist, einen Heizkreislauf (F3) umfasst, von dem ein Einlass (F31) mit dem Auslass (E12) für Gas (3) des ersten Phasenabscheiders (E1) verbunden ist und von dem der Auslass (F31) mit dem Einlass (B1) des Adsorptionsmoduls mit Druckänderung für Wasserstoff (B) verbunden ist.

14. Installation nach Anspruch 12 oder 13, die ferner mindestens ein Element aus den Folgenden aufweist:
- eine Reformierungseinheit (G),
- einen Verschiebungsreaktor (H),
- eine Trocknungseinheit (I),
- eine Destillationskolonne (N),
- mindestens ein Membransystem (O1, O2),
- mindestens einen Kompressor (M, J1, J2, J3, J4),
- mindestens ein Expansionsventil (K),
- mindestens ein Ventil (L),
- mindestens eine Pumpe.

15. Installation nach einem der Ansprüche 12 bis 14, die einen mit dem Adsorptionsmodul mit Druckänderung für Wasserstoff (B) verbundenen Wasserstoffgasauslass (5) aufweist.

## Claims

1. Method for treating a mixture (1) in view of separating carbon dioxide and hydrogen of this mixture, wherein:
i) the mixture (1) is cooled and partially condensed and a first liquid (4) is separated from the mixture in a first (phase separator (E1),
ii) a gas (3) coming from the first phase separator (E1) is treated in an adsorption module with pressure variation for hydrogen (B) to produce a gas rich in hydrogen (5) and a hydrogen-depleted waste gas (2), and
iii) said hydrogen-depleted waste gas (2) is cooled and partially condensed and a second liquid (7) is separated from the gas remaining (8) in a second phase separator (E2), separate from the first phase separator (E1),
the first and the second liquid (4, 7) being rich in carbon dioxide, **characterised in that** the partial condensations in steps i) and iii) are achieved in one same cryogenic unit (C).

2. Method according to claim 1, wherein the partial condensations in steps i) and iii) are achieved in one same heat exchanger (D).

3. Method according to any one of the preceding claims, wherein said mixture (1) is partially condensed in step i) at a temperature lower than -20°C, and more specifically less than -40°C.

4. Method according to any one of the preceding claims, wherein step i) comprises the following sub-steps:
- a first partial condensation of said mixture (1) at a temperature less than -20°C, and more specifically close to around -40°C,
- a separation of the liquid (4a) from the remainder of the mixture (3a) in a phase separator (E1a),
- a second partial condensation of said remainder of the mixture (3a) at a temperature less than -40°C, and more specifically around -50°C,
- a separation of the liquid (4b) from the remaining gas (3b) in another phase separator (E1b), the liquid (4a, 4b) being rich in carbon dioxide.

5. Method according to any one of the preceding claims, comprising, before step i), a preliminary step of generating a mixture (10) rich in CO and H₂, for example by an autothermal reforming (ATR), steam methane reforming (SMR) or partial oxidation (POX) method.

6. Method according to claim 5, wherein said mixture (10) rich in CO and H₂ is treated in a shift reactor (H) to provide a CO₂ and H₂-enriched mixture (11).

7. Method according to claim 5 or 6, wherein said mixture (11) is compressed and/or dehydrated.

8. Method according to any one of the preceding claims, wherein said gas (2) is partially condensed in step iii) at a temperature less than -20°C, and more specifically less than -40°C.

9. Method according to any one of the preceding claims, wherein the liquid (4, 7) is distilled to provide a fraction (15) rich in CO₂ and a CO₂-depleted fraction (16).

10. Method according to claim 9, wherein said CO₂-depleted fraction (16) is recycled by mixing it with said mixture (1), before step i), upstream of the first phase separator (E1) or by mixing it with said hydrogen-depleted gas (2), between steps ii) and iii), upstream of the second phase separator (E2).

11. Method according to any one of the preceding claims, wherein said remaining gas (8) from the second phase separator (E2) is filtered by at least one membrane system (O1, O2).

12. Installation for the implementation of the method according to one of the preceding claims, comprising:
- an adsorption module with pressure variation for hydrogen (B), and
- a cryogenic unit (C) comprising a first and a second phase separator (E1, E2), and a heat exchanger (D) comprising a first cooling circuit (F1) of which an inlet (F11) is configured to be connected to a source (M) of said mixture (1), and of which an outlet (F12) is connected to the first phase separator (E1) of which a gas (3) outlet (E12) is connected to an inlet (B1) of the adsorption module with pressure variation for hydrogen (B), the adsorption module with pressure variation for hydrogen comprising a hydrogen-depleted gas (2) outlet (B2) which is connected to an inlet (F21) of a second cooling circuit (F2) of the heat exchanger (D) or of another heat exchanger or the cryogenic unit (C), an outlet (F22) of this second cooling circuit (F2) being connected to the second phase separator (E2).

13. Installation according to claim 12, wherein the heat exchanger (D) comprising the first and/or the second cooling circuit (F1, F2) comprises a heating circuit (F3) of which an inlet (F31) is connected to the gas (3) outlet (E12) of the first phase separator (E1) and of which the outlet (F31) is connected to the inlet (B1) of the adsorption module with pressure variation for hydrogen (B).

14. Installation according to claim 12 or 13, further comprising at least one element from among:
- a reforming unit (G),
- a shift reactor (H),
- a drying unit (I),
- a distillation column (N),
- at least one membrane system (O1, O2),
- at least one compressor (M, J1, J2, J3, J4),
- at least one reducer (K),
- at least one valve (L),
- at least one pump.

15. Installation according to one of claims 12 to 14 comprising a gaseous hydrogen outlet (5) connected to the adsorption module with pressure variation for hydrogen (B).
